**Europäisches Patentamt**

**European Patent Office**

**Office européen des brevets**

(19)

(11) Veröffentlichungsnummer: **0 133 158**
**B1**

# (12) EUROPÄISCHE PATENTSCHRIFT

(45) Veröffentlichungstag der Patentschrift:
**16.09.87**

(51) Int. Cl.⁴: **B 25 B 1/20,** B 29 C 65/20

(21) Anmeldenummer: **84810322.2**

(22) Anmeldetag: **29.06.84**

(54) **Schnellspannfutter.**

(30) Priorität: **22.07.83 CH 4024/83**

(43) Veröffentlichungstag der Anmeldung:
**13.02.85 Patentblatt 85/7**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**CH - A - 634 247**
**DE - A - 1 452 623**
**DE - A - 2 309 286**
**DE - B - 1 947 285**
**GB - A - 2 048 413**

(73) Patentinhaber: **Maschinenfabrik Flums AG,
CH-8890 Flums (CH)**

(72) Erfinder: **Benz, Gottlieb, Stox, CH-8890 Flums (CH)**

(74) Vertreter: **Feldmann, Paul David et al, c/o
Patentanwaltsbüro FELDMANN AG Kanalstrasse 17,
CH-8152 Glattbrugg (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Schnellspannfutter, bestehend aus zwei halbringförmigen, um eine aussenliegende Schwenkachse (3) aufklappbaren Gehäusehälften (1, 2), in denen Spannbacken (60) gehalten sind, die mittels zwei halbringförmigen Spannbacken-Verstellringen (40, 41; 400, 410), welche drehbar in Nuten (14, 24) in den Gehäusehälften gelagert und radial verstellbar sind, wobei an den der Schwenkachse diametral gegenüberliegenden Enden der Gehäusehälften eine Klemm-Schliessvorrichtung (11–13, 16, 53) vorgesehen ist.

Derartige aufklappbare Schnellspannfutter finden insbesondere bei Rohrschweissmaschinen Anwendung, in denen Kunststoffrohre miteinander verschweisst oder mit Kunststoffmuffen verschweisst werden. Das Schweissen erfolgt durch Erhitzen und Zusammenpressen der zu verschweissenden Teile.

Diese müssen daher im Futter genau zentriert und auch in axialer Richtung fest gehalten sein, damit die Teile genügend fest gegeneinander gepresst werden können.

Ein Schnellspannfutter dieser Art ist in der CH-PS 634 247 beschrieben. Dieses Futter hat ein aufklappbares Gehäuse, in dem zwei geteilte, konzentrisch angeordnete Verstellringe für die Klemmbacken angeordnet sind. Der eine Verstellring dient der Schnellverstellung der Backen und der zweite Ring dient dem Spannen der Backen. Der der Schnellverstellung dienende Verstellring ist am Gehäuse festklemmbar. Beim Einspannen eines runden Teiles muss zuerst das Gehäuse geschlossen werden, der Schnellspannring mittels eines Hebels betätigt und in dieser Lage vorgespannt werden, und erst danach kann mittels eines weiteren Hebels eine Klemmwirkung mit Hilfe des zweiten Ringes erzielt werden.

Die Erfindung stellt sich zur Aufgabe, ein Schnellspannfutter zu schaffen, das in seinem Aufbau einfacher und billiger herzustellen ist und bequemer zu bedienen ist.

Die Erfindung löst diese Aufgabe mit einem Schnellspannfutter, das die im Patentanspruch 1 erwähnten Merkmale aufweist.

Dass ein solches Schnellspannfutter einfacher im Aufbau ist als das Futter nach der CH-PS 634 247, geht schon daraus hervor, dass es nur einen einzigen Verstellring für die Klemmbacken hat. Das eigentliche Festspannen erfolgt erst beim Zusammenklemmen der beiden Gehäusehälften.

In der Zeichnung sind zwei Ausführungsbeispiele des Erfindungsgegenstandes dargestellt.

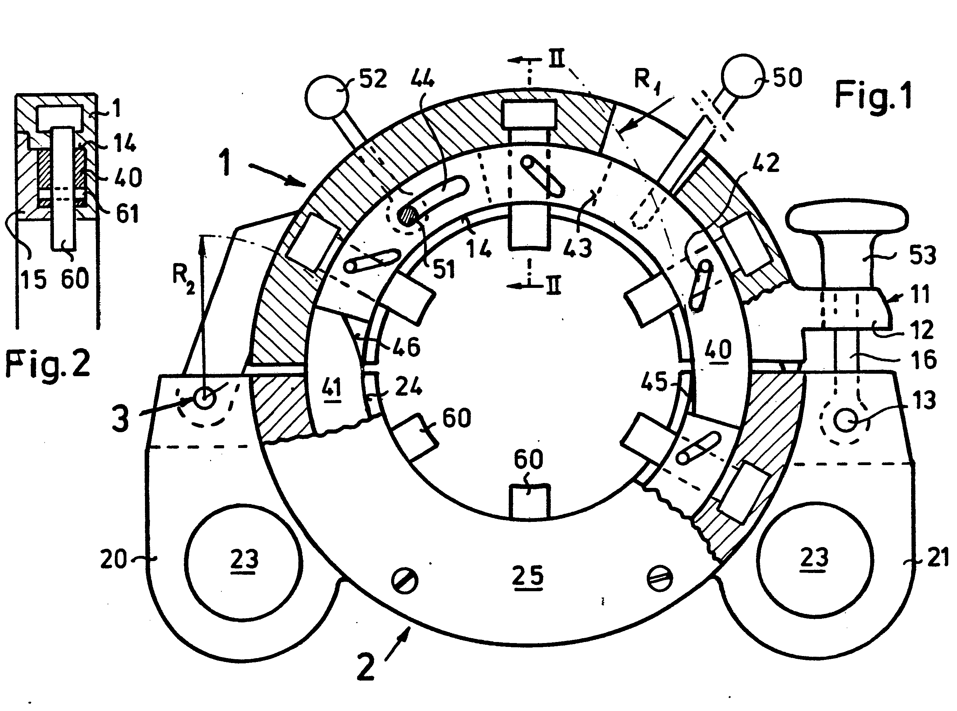

Sie zeigt in Figur 1 ein Schnellspannfutter teilweise im Schnitt;

Figur 2 einen Schnitt längs der Linie II – II in Figur 1;

Figur 3 eine Variante zum Futter nach Figur 1.

Das Schnellspannfutter umfasst eine untere Gehäusehälfte 1 und eine obere Gehäusehälfte 2, die um die Achse 3 schwenkbar miteinander verbunden sind. Die untere Gehäusehälfte 2 ist mit Laschen 20, 21 versehen, mit denen das Futter auf Führungsstangen 23 einer Schweissmaschine in Axialrichtung verschiebbar ist.

Die Gehäusehälften sind je mit einer halbkreisförmigen Nut 14, 24 versehen, in denen die Hälften 40, 41 des diagonal geteilten Verstellringes drehbar gelagert sind.

In geschlossenem oder annähernd geschlossenem Zustand der beiden Gehäusehälften 1, 2 können die beiden Verstellringhälften 40, 41 gemeinsam mittels des Verstellhebels 50 in der Nut gedreht werden.

Beide Verstellringhälften sind dazu mit schräg zur radialen Spannrichtung verlaufenden, der Anzahl Klemmbacken entsprechenden Schlitzen 42 versehen. Die Klemmbacken 60 sind in Schlitzen der Gehäusehälften 1, 2 radial verschiebbar geführt und durchsetzen die Verstellringhälften durch Ausnehmungen 43. Ein den Klemmbacken 60 durchsetzender und in die beidseits der Ausnehmung 43 angebrachten Schlitze 42 eingreifender Stift 61 dient der radialen Verschiebung der Klemmbacken, wenn die Verstellringe gedreht werden.

In der Zeichnung sind die Klemmbacken in einer Lage dargestellt, bei der sie so weit wie möglich zum Zentrum hin ausgefahren sind. Im oberen Verstellring 40 ist ein gekrümmter, konzentrisch zur Ringkontur verlaufender Schlitz 44 angebracht, der von einem Bundbolzen 51, der mit Gewinde versehen ist, durchsetzt wird.

Der Gewindeteil ragt durch den Gehäuseteil 1 hindurch und gestattet, mittels des aussen angebrachten Hebels 52, die Verstellringhälfte 40 am Gehäuseteil 1 festzuklemmen.

Im unteren Teil der Figur 1 und in Figur 2 sind die ringförmigen Abdeckungen 15, 25 ersichtlich, die die Gehäusehälften aussen abdecken und der Führung der Verstellringhälften dienen.

Die obere Gehäusehälfte 1 ist mit einer Nase 11 versehen, die einen nach aussen offenen Schlitz 12 aufweist. An der Lasche 21 ist ein um eine Achse 13 schwenkbarer Schraubbolzen 16 angebracht. Mit Hilfe der Griffmutter 53 kann daher der obere Gehäuseteil 1 auf den unteren Gehäuseteil 2 festgeklemmt und auch wieder gelöst werden, damit das Futter aufgeklappt werden kann.

Der obere Verstellring 40 ist bei 45 entsprechend dem Schwenkradius $R_1$, der untere Verstellring 41 ist bei 46 entsprechend dem Schwenkradius $R_2$ abgeschrägt. Dies erlaubt, das Spannfutter auch bei voll ausgefahrenen Klemmbacken, ohne die Lage der Verstellringe zu verändern, zu öffnen.

Es dürfte klar sein, dass bei ganz zurückgezogenen Klemmbacken die Trennstellen der Verstellringhälften 40, 41 mit der Trennlinie der beiden Gehäusehälften 1, 2 zusammenfallen. Ohne die Abschrägungen 45, 46 an den Verstellringhälften liesse sich das Futter nur in dieser Lage aufklappen.

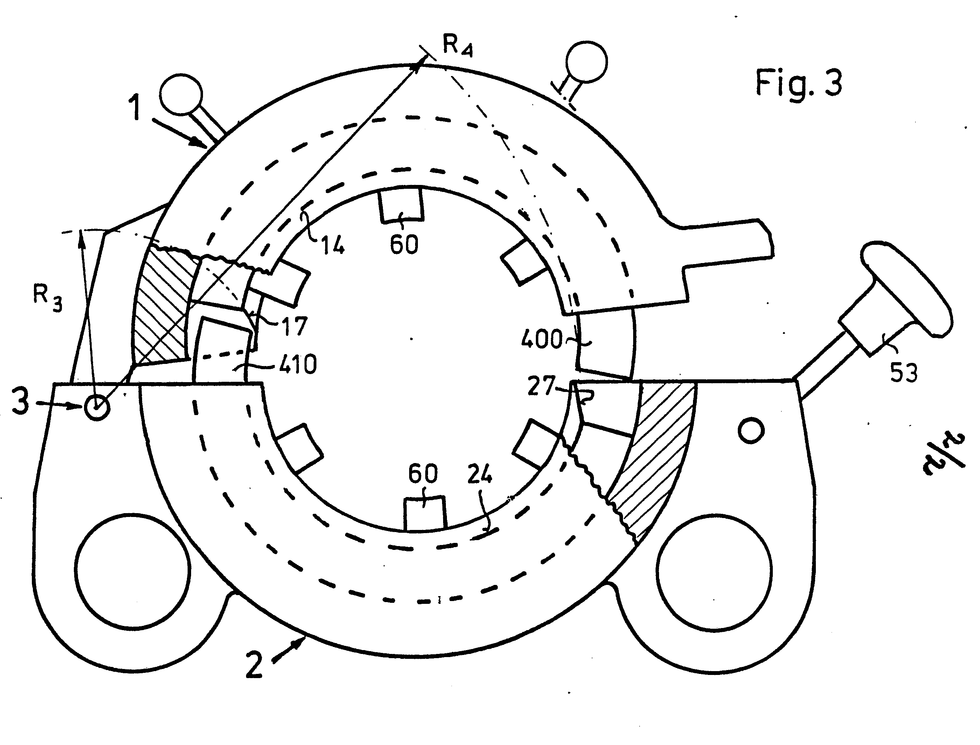

In Figur 3 ist ein ähnliches Spannfutter wie in Figur 1 und 2 während des Aufklappens dargestellt. Gleiche Teile sind daher mit denselben Bezugszahlen wie bei Figur 1 und 2 bezeichnet.

Der wesentliche Unterschied besteht darin, dass hier nicht die Verstellringhälften 400, 410, sondern die in den Gehäusehälften 1, 2 angebrachten Führungsnuten 14, 24 bei 17 und bei 27 entsprechend dem Schwenkradius $R_3$ beziehungsweise $R_4$ abgeschrägt sind.

Beim Klemmen eines im Querschnitt runden Teiles geht man wie folgt vor:

1. Bei voll geöffnetem, aufgeklapptem Gehäuse einlegen;

2. Gehäuse zuklappen und mittels Griffmutter 53 bis auf einen Spalt von beispielsweise 2 bis 3 mm schliessen;

3. Mittels Verstellhebel 50 Backen 60 vorspannen beziehungsweise zum Anliegen an den zu klemmenden Teil bringen und in dieser Lage den Verstellring 40 mittels Klemmhebel 52 im Gehäuseteil 1 festklemmen;

4. Eine definitive, feste Klemmung durch Zusammenschrauben der Gehäusehälften 1, 2 mittels Griffmutter 53 herstellen.

Bei wiederholtem Klemmen gleich dimensionierter Teile, wie dies bei Rohrschweissmaschinen oft vorkommt, braucht das Futter nur jeweils auf- und wieder zugeklappt zu werden, da die einmal gewählte Einstellung der Klemmbacken erhalten bleibt.

In der Praxis erweist sich die besondere Eigenschaft des Schnellspannfutters, nämlich, dass es unter Beibehaltung einer einmal gewählten Einstellung der Klemmbacken auf- und zugeklappt werden kann, als besonders vorteilhaft.

Insbesondere bei der Verwendung zweier Schnellspannfutter in einer Schweissmaschine für Kunststoffrohre kommt es meist vor, dass nacheinander Rohrabschnitte gleichen Durchmessers zu einem langen Leitungsstrang miteinander verschweisst werden.

In einem solchen Fall brauchen nach erfolgter Verbindung nur die beiden Schnellspannfutter aufgeklappt zu werden, die Maschine zur nächsten Schweissstelle gebracht zu werden und die Futter wieder zugeklappt und mit der Griffmutter 53 gespannt zu werden.

## Patentansprüche

1. Schnellspannfutter, bestehend aus zwei halbringförmigen, um eine aussenliegende Schwenkachse (3) aufklappbaren Gehäusehälften (1, 2), in denen Spannbacken (60) gehalten sind, die mittels zwei halbringförmigen Spannbacken-Verstellringen (40, 41; 400, 410), welche drehbar in Nuten (14, 24) in den Gehäusehälften gelagert und radial verstellbar sind, wobei an den, der Schwenkachse diametral gegenüberliegenden Enden der Gehäusehälften eine Klemm-Schliessvorrichtung (11–13, 16, 53) vorgesehen ist, dadurch gekennzeichnet, dass entweder die Verstellringhälften (40, 41) je an einem Ende (45, 46) abgeschrägt sind, oder dass die Führungsnuten (24) der beiden Gehäusehälften je an einem Ende eine Ausnehmung (17, 27) aufweisen, wobei diese Abschrägungen beziehungsweise die Ausnehmungen so dimensioniert sind, dass sie ein Aufklappen des Futters bei maximaler Verstellung der Verstellringhälften, bei der sie aus den Gehäusehälften herausragen, erlauben.

2. Schnellspannfutter nach Anspruch 1, dadurch gekennzeichnet, dass eine Verstellringhälfte (40) in einer Gehäusehälfte (1) mittels einer Klemmvorrichtung (51, 52) festklemmbar ist.

3. Verwendung des Schnellspannfutters nach Anspruch 1, beim Spannen von im Querschnitt kreisrunden Körpern, dadurch gekennzeichnet, dass der Körper bei nicht ganz geschlossenen Gehäusehälften mittels Spannhebel (50) zwischen den Spannbacken (60) vorgespannt und die obere Verstellringhälfte (40; 400) in dieser Lage mittels Hebel (52) festgeklemmt wird und dass erst danach die beiden Gehäudehälften (1, 2) mittels Griffmutter (53) zusammengeklemmt werden.

4. Verwendung des Schnellspannfutters nach Anspruch 2, dadurch gekennzeichnet, dass bei wiederholtem Spannen gleich dimensionierter Körper nur die Gehäusehälften durch Lösen der Griffmutter (53) aufgeklappt und wieder zusammengeklemmt zu werden brauchen.

## Revendications

1. Collier de serrage rapide, composé de deux demi-coquilles (1, 2) de forme mi-annulaire et pouvant se joindre bout à bout par rotation autour d'un axe extérieur (3) et dans lesquelles sont logés des supports de serrage (60), qui, moyennant deux demi-anneaux – d'ajustement (40, 41; 400, 410), pouvant subir un mouvement de rotation dans les rainures (14, 24) à coussinets prévues dans les demi-coquilles (1, 2), peuvent être ajustés radialement, et comportant également à l'extrémité diamétralement opposée de l'axe (3) de rotation des demi-coquilles (1, 2) un appareil de fermeture par serrage (11–13, 16, 53), caractérisé en ce que les demi-anneaux d'ajustement (40, 41) sont chanfreinés à l'une de leurs extrémités (45, 46) ou encore que les rainures de guidage (24) des deux demi-coquilles (1, 2) présentent un élargissement (17, 27) à une de leurs extrémités, dans lesquels respectivement les chanfreins (45, 46) ou les élargissements (17, 27) sont dimensionnés de manière à ce que la fermeture du collier soit possible pour un ajustage maximum des demi-anneaux d'ajustement (40, 41; 400, 410) lorsque ceux-ci sortent des demi-coquilles (1, 2).

2. Collier de serrage rapide suivant la revendication 1, caractérisé en ce que l'un des demi-anneaux d'ajustement (40) peut être fixé par serrage dans la demi-coquille (1) correspondante au moyen d'un dispositif de serrage (51, 52).

3. Procédé de fixation par serrage de corps de section circulaire utilisant le collier de serrage suivant la revendication 1, caractérisé en ce que le corps de section circulaire, le collier formé par les demi-coquilles (1, 2) n'étant pas encore complètement fermé, est préalablement serré entre les supports de serrage (60) tandis que le demi-anneau supérieur (40, 400) est fixé par serrage dans cette position au moyen du levier (52), et c'est seulement ensuite que les demi-coquilles (1, 2) sont fixées ensemble en fermant le collier au moyen de la poignée (53).

4. Procédé de fixation répétée par serrage de corps de même section au moyen du collier de serrage suivant la revendication 2, caractérisé en ce que le serrage et le déserrage des demi-coquilles (1, 2) se fait uniquement au moyen de la poignée (53).

**Claims**

1. A fast-clamping chuck comprising a housing formed of two semi-circular sections (1, 2) pivotable about an external pivot (3), radially adjustable clamping shoes (60) held in said housing sections and mounted in two semi-circular clamping-shoe adjuster rings (40, 41: 400, 410) located rotatably in grooves (14, 24) in the housing sections, and a clamping arrangement (11–13, 16, 53) provided at the ends of the housing sections diametrically opposite the pivot, characterised in that either the adjuster-ring sections (40, 41) are each chamfered at one end (45, 46) or the guiding grooves (24) in the two housing sections are each widened at one end (17, 27), the chamfering or widening being so dimensioned as to permit opening of the chuck with the adjuster-ring sections fully rotated so that they project from the housing sections.

2. A fast clamping chuck as claimed in claim 1, and characterised in that an adjuster-ring section (40) can be clamped in one housing section (1) by means of a clamping arrangement (51, 52).

3. The use of fast clamping chuck as claimed in claim 1, in the clamping of bodies of circular cross-section, characterised in that the circular body is provisionally clamped between the clamping shoes (60) by means of a clamping lever (50) whilst the housing sections are not fully closed, the upper adjuster-ring section (40, 400) is then clamped firmly in this position by means of a lever (52), and only then are the two housing sections (1, 2) clamped together by means of a threaded handle (53).

4. The use of a fast-clamping chuck as claimed in claim 2, characterised in that in the repeated clamping of bodies of constant dimensions only the housing sections need to be opened and clamped together again by means of a threaded handle (53).

Fig.1

Fig.2

Fig. 3